Europäisches Patentamt

European Patent Office

Office européen des brevets

(11) Publication number: **0 191 430**
**B1**

# EUROPEAN PATENT SPECIFICATION

(45) Date of publication of patent specification: **09.05.90**

(51) Int. Cl.⁵: **G 21 C 7/26, G 21 C 7/10**

(21) Application number: **86101594.9**

(22) Date of filing: **07.02.86**

(54) Apparatus and method for refurbishing a spectral shift apparatus for a nuclear reactor fuel assembly.

(30) Priority: **12.02.85 US 701052**

(43) Date of publication of application:
**20.08.86 Bulletin 86/34**

(45) Publication of the grant of the patent:
**09.05.90 Bulletin 90/19**

(84) Designated Contracting States:
**BE DE FR GB IT SE**

(56) References cited:
**EP-A-0 167 069**
**FR-A-2 498 800**
**FR-A-2 523 358**
**GB-A-2 160 698**
**NL-A- 278 799**

(73) Proprietor: **WESTINGHOUSE ELECTRIC CORPORATION**
**Westinghouse Building Gateway Center**
**Pittsburgh Pennsylvania 15222 (US)**

(72) Inventor: **Baloh, Frank Joseph**
**R.D. No. 1**
**Dawson Pennsylvania 15428 (US)**
Inventor: **Sparrow, James Alan**
**3235 Franklin Drive**
**Pittsburgh Pennsylvania 15235 (US)**

(74) Representative: **Patentanwälte Dipl.-Ing. R. Holzer Dipl.-Ing. (FH) W. Gallo**
**Ludwigstrasse 26**
**D-8900 Augsburg (DE)**

Courier Press, Leamington Spa, England.

## Description

The present invention relates generally to the art of nuclear reactors and, more particularly, to a method and an apparatus for refurbishing a spectral shift apparatus for reuse in a nuclear fuel assembly.

It is conventional practice to initially design into the core of a pressurized water reactor an excess of reactivity for the purpose of extending the life of the core between refuelling operations. One known technique of controlling this excess reactivity is to produce an initial spectral shift having the effect of increasing the epithermal or low reactivity part of the neutron spectrum at the expense of the thermal or high reactivity part, which results in the production of fewer thermal neutrons and, hence, in reduced fission. Then, later in the cycle when fission is naturally decreasing, a reverse shift from the epithermal part of the neutron spectrum back to the thermal part thereof is undertaken. This technique employing spectral shift usually involves the use of so-called displacer rods which are initially placed into the reactor core so as to displace some of the neutron moderating coolant therein and, hence, reduce core reactivity. Then, some time later in the core cycle, as reactivity is consumed, the moderator/coolant displacement effected initially is removed so as to shift the neutron spectrum back to its thermal part and thereby raise the level of reactivity.

There are various approaches of effecting spectral shift by means of displacer rods, some of them relying upon the use of displacer rods which are hollow and sealed and are designed to become flooded with primary moderator/coolant at a given time during a core cycle. It is the principal object of the present invention to provide a method and apparatus for refurbishing, for reuse, displacer rods which were flooded with moderator/coolant during an earlier core cycle.

The invention, from one aspect thereof, accordingly resides in a method of refurbishing a spectral shift apparatus having at least one hollow water displacer rod substantially filled with moderator/coolant liquid, characterized by the steps of: (a) establishing fluid flow communication with an upper interior portion of said displacer rod to provide an air entrance path having an outlet disposed in said upper interior portion; (b) establishing fluid flow communication with a lower interior portion of said displacer rod to provide a separate liquid exit path having an inlet disposed in said lower interior portion; and (c) introducing air through said air entrance path under sufficient pressure to force all liquid above the level of said inlet from the displacer rod through said liquid exit path.

From another aspect thereof, the invention resides in an apparatus for refurbishing a spectral shift apparatus having at least one hollow water displacer rod substantially filled with moderator/coolant liquid, characterized by the combination comprising: (a) first conduit means disposed in fluid flow communication with an upper portion of the interior of said displacer rod; (b) second conduit means disposed in fluid flow communication with a lower portion of the interior of the displacer rod; and (c) means interconnectable with said first and second conduit means in a manner such as to provide an entrance path for air under pressure to the upper interior portion through the first conduit means, and to provide an exit path for liquid from said lower interior portion through said second conduit means, said exit path and said entrance path being separate from each other.

The interconnectable means of the apparatus preferably comprises a tubular member having an opening at one end thereof, ports in fluid flow communication respectively with said first and second conduit means, and a central plenum communicating with said opening and with said ports; and an elongate refurbishing tool which is insertable into said central plenum of the tubular member through the opening in its end, and is provided with flow passages placed in separate fluid flow communication with the respective ports in the tubular member when the tool is inserted therein. It will be appreciated that with the refurbishing tool thus inserted in the tubular member, the introduction of air under pressure through one of its flow passages and associated conduit means will cause the moderator/coolant liquid in the displacer rod to be forced out through the other conduit means and the other flow passage of the tool until the liquid level in the displacer rod has dropped down to the lowest or inlet end of said other conduit means. If it is desired to leave a certain quantity of the moderator/coolant liquid (ordinarily, water) in the displacer rod, the inlet end of said other conduit means should be positioned at an appropriate level above the bottom of the rod interior. This is important if the apparatus embodying the invention is to be used for refurbishing the spectral shift apparatus which is the subject matter of and is claimed in Applicants' copending patent application EP-A-191 429 and to which the present invention is shown applied herein.

A preferred embodiment of the invention will now be described, by way of example, with reference to the accompanying drawings, in which:

Fig. 1 is an elevational view of a conventional fuel assembly together with the refurbishing apparatus embodying the present invention and a spectral shift apparatus according to an invention claimed in Applicants' copending patent application EP-A-191 429, the fuel assembly being illustrated in a vertically foreshortened form and with a portion of its top nozzle broken away to more clearly show the spectral shift and refurbishing apparatus;

Fig. 2 is an enlarged, partially sectioned, elevational view of the spectral shift and refurbishing apparatus as removed from the fuel assembly;

Fig. 3 is a sectional view of a portion of the spectral shift apparatus as taken along line 3-3 of Fig. 2;

Fig. 4 is an enlarged top plan view of a baffle screen such as employed in the spectral shift apparatus;

Fig. 5 is an enlarged top plan view of a rupturable disk such as employed in the spectral shift apparatus.

Fig. 6 is a sectional view of the disk as taken along line 6-6 of Fig. 5 and illustrating the disk before rupture thereof;

Fig. 7 is a sectional view of the disk similar to Fig. 6 but showing the disk after rupture;

Fig. 8 is an enlarged fragmentary, elevational view, partially in section, of the refurbishing apparatus as removed from the fuel assembly of Fig. I;

Fig. 9 is an enlarged fragmentary, elevational view, partially in section, of an alternative form of the spectral shift apparatus; and

Fig. 10 is a simplified representation of a whole nuclear reactor system, illustrating particularly those parts thereof to which operational transient adjustments are made in order to activate the spectral shift apparatus for the purpose of increasing the reactivity in the reactor core.

In the following description, like reference characters designate like or corresponding parts throughout the several views of the drawings, and terms such as " forward", " rearward", " "left", " right", " upwardly", "downwardly", and the like, are employed as words of convenience not to be construed as limiting terms.

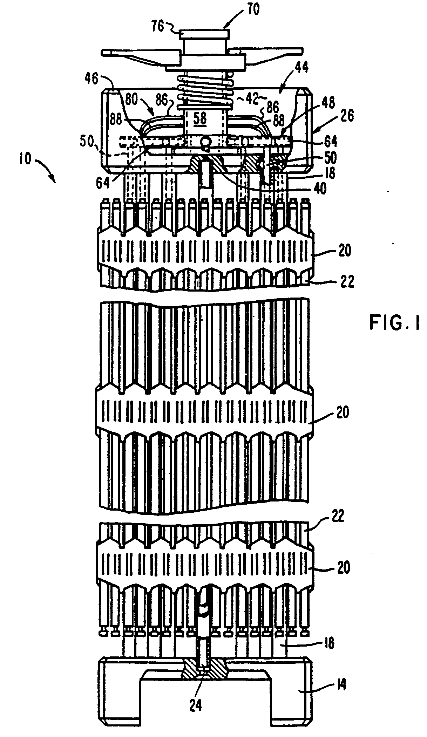

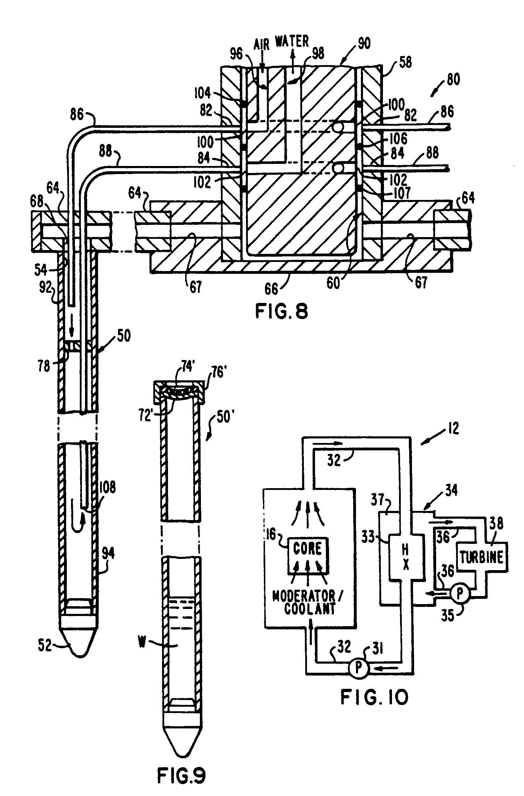

Referring now to the drawings, and particularly to Fig. 1, the fuel assembly illustrated therein and generally designated with reference numeral 10 is of the type used in pressurized water reactors (PWR), such as the one diagrammatically illustrated in simplified form in Fig. 10 and designated with numeral 12. The fuel assembly 10 comprises a lower end structure or bottom nozzle 14 for supporting the assembly 10 on the lower core plate (not shown) in the core 16 of the PWR 12, guide tubes or thimbles 18 extending longitudinally upward from the bottom nozzle 14, transverse grids 20 axially spaced along the guide thimbles 18, an organized array of fuel rods 22 transversely spaced and supported by the grids 20, an instrumentation tube 24 located in the center of the fuel assembly, and an upper end structure or top nozzle 26 attached to the upper ends of the guide thimbles 18. The fuel assembly 10 forms an integral unit capable of being conventionally handled without damage to its assembly parts.

As well known in the art, each of the fuel rods 22 contains nuclear fuel pellets (not shown) composed of fissile material, and has its opposite ends sealed. During reactor operation, a primary liquid moderator/coolant, such as water, held under a sufficiently high pressure (e.g. at 153 atm.) to keep it in liquid form, is pumped through the fuel assemblies 10 of the core 16 in order to extract heat generated therein. As shown in Fig. 10, the primary coolant is circulated by a primary pump 31 through a closed primary path 32 which leads through a first chamber 33 of a heat exchanger 34 where the extracted heat is given up to a secondary flow of water circulated by a secondary pump 35 through a closed secondary path 36 which leads through a second chamber 37 of the heat exchanger 34 where the water in the secondary path is turned into steam used to drive a turbine 38 for generating electricity.

In the operation of the PWR 12, it is desirable to prolong the life of the reactor core 16 for as long as feasible so as to better utilize the uranium fuel and thereby reduce fuel costs. In order to do so, it is common practice to initially design into the reactor core 16 an excess of reactivity and, at the same time, provide means for reducing the use of excess reactivity at the early stage of the core operating cycle and for increasing it later in the operating cycle. A number of control rods (not shown) reciprocally movable in some of the guide thimbles 18 can be employed to partially effectuate excess reactivity control but full control usually is achieved, as mentioned earlier herein, by additional means such as through spectral shift involving the displacement of moderator water to reduce excess reactivity at an early stage of the core operating cycle, and the subsequent removal of the moderator displacement to increase the reactivity. The apparatus according to the present invention and the one embodying the invention claimed in Applicant's copending application mentioned above are designed to permit spectral shift to be implemented in existing reactors and on a reusable basis. Both of the above-mentioned apparatus are associated, when in use, with the top nozzle of the fuel assembly and with some of the guide thimbles intended to have no control rods inserted therein. Therefore, it is briefly noted that the top nozzle 26 comprises a transversely extending adapter plate 40 and upright sidewalls 42 connected to the plate 40 at its periphery and extending therefrom upwards so as to define an enclosure or housing 44. Connected to the top of the sidewalls 42 is an annular flange 46 adapted to have clamped thereto leaf springs (not shown) which cooperate with the upper core plate (not shown) of the reactor core 16 to prevent hydraulic lifting of the fuel assembly 10 while allowing for changes in fuel assembly length, as well known in the art.

Spectral Shift Apparatus and Method

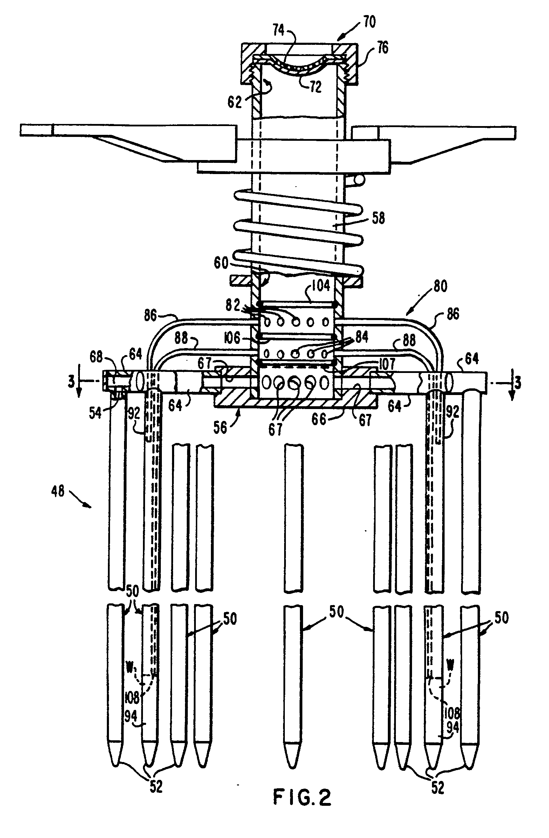

As shown in Fig. 1, the spectral shift apparatus embodying the invention and generally designated with numeral 48 is disposed within the housing 44 of the top nozzle 26 and extends into some of the guide thimbles 18. Referring also to Fig. 2, the spectral shift apparatus 48 includes a plurality of water displacer rods 50 adapted to be inserted into respective ones of the guide thimbles 18 of the fuel assembly 10 for the purpose of displacing a predetermined volume of the liquid neutron moderating coolant present .in the assembly 10 and thereby reducing the hydrogen/uranium ratio, hence the reactivity level of the reactor core 16. Each of the displacer rods 50 consists of an elongate tubular body 51 which is sealed at its lower end with an end plug 52, has a flow opening 54 defined at its upper end, and contains a quantity of water W equivalent to a predetermined minor fraction, e.g. 15%, of the total volume of the rod 50.

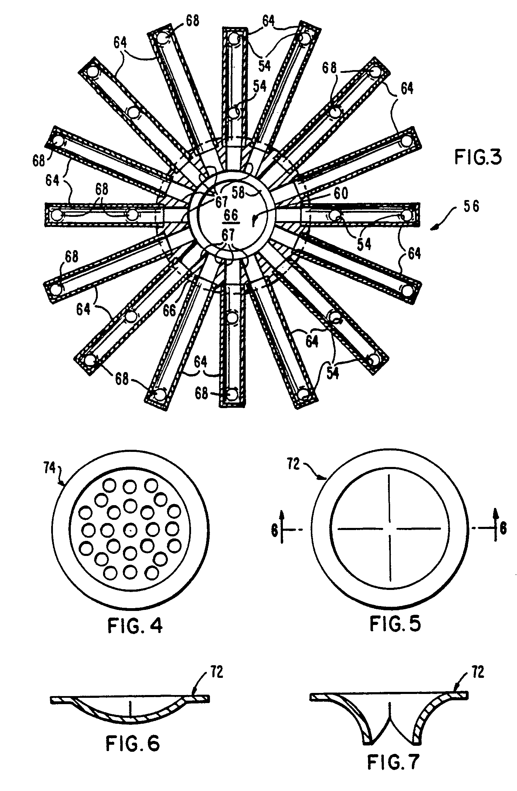

The spectral shift apparatus 48 also includes a manifold, generally designed with numeral 56, which interconnects the displacer rods 50 and is in fluid flow communication therewith. The manifold 56 is located atop the fuel assembly 10, being disposed within the top nozzle 26 and resting on its adapter plate 40 (see Fig. 1). Referring in particular to Figs. 2 and 3, the manifold 56 comprises a central inlet in the form of a tubular and preferably cylindrical member 58 which defines a central plenum 60 axially therethrough and has at its upper end a central inlet opening 62 which is in fluid flow communication with the plenum. The manifold 56 includes also a plurality of hollow tubular vanes 64 which are mounted on a hub 66 attached to the cylindrical member 58 and closing it at the lower end thereof. The vanes 64 which extend radially outward from the member 58 are in fluid flow communication with the central plenum 60 through radial flow channels 67 formed in the hub 66, and they are provided with openings 68 which form outlets of the manifold 56. The displacer rods 50 are connected, at their upper ends, to the various tubular vanes 64 such that the flow opening 54 of each displacer rod is in fluid flow communication with an outlet 68 of the manifold. The manifold 56 and the tubular vanes 64 serve as a support structure for the displacer rods.

In its preferred form, the spectral shift apparatus 48 further includes sealing means, generally designated 70, connected to the cylindrical member 58 of the manifold 56 and sealing the inlet opening 62 therein. The sealing means 70 comprises a rupturable disk 72, a baffle screen 74, and an annular cap 76, commercially available per se as standard off-the-shelf items. The disk 72 is selected to rupture at a given pressure differential thereacross. For instance, in order to avoid rupturing due to pressure variations caused by application of design duty cycle transients which at a maximum are not expected to be substantially above 100 atmospheres, the disk 72 could be designed to fail or rupture only if the pressure differential exceeds 120 atmospheres. As seen from Figs. 2 and 6, the disk 72 is dished and is so mounted on the tubular member 58 that its convex side faces inward and its concave side faces outwards. Preferably, the dished portion of the dish 72 is prescored to promote rupture in a particular direction, namely, inwardly of the central plenum 60 within the member 58, as illustrated in Fig. 7. In order to additionally ensure that the disk 72 will rupture inwards of the tubular member 58, the baffle screen 74 (see also Fig. 4) is placed over its concave or high-pressure side. The disk 72 and the screen 74 are sealingly but removably and replaceably mounted on the upper end of the cylindrical member 58 by means of the annular cap 76 which is internally threaded and removably connected to externally threaded upper end portion of the member 58 so as to permit a ruptured disk 72 to be eventually removed and replaced with a new one.

An alternative to the arrangement described above and employing a plenum with a single sealing disk 72 common to all of the displacer rods 50 would be one in which each displacer rod is sealed separately, such as shown in Fig. 9 illustrating a displacer rod 50' having its own sealing means 70' comprising a rupturable disk 72', baffle screen 74', and annular cap 76' each performing the same functions as the corresponding parts of the sealing means 70 described above. This arrangement has the advantage that if one of the seals in the apparatus fails prematurely, the effect of its failure will be less noticeable from a power peaking and reactivity insertion viewpoint than the effect of failure of a common seal resulting in flooding of all displacer rods. However, the common sealed plenum approach is appealing because of the lesser number of parts and greater simplicity with regard to refurbishment. Practitioners no doubt will base their ultimate choice between these two different approaches upon considerations regarding trade-offs of seal reliability, power peaking, and other factors. Regardless of the approach chosen (i.e., single seal or multiple seals), the seal is designed to rupture on demand and to provide the flooding of the displacer rods 50 when desired.

The method of effecting spectral shift by means of the spectral shift apparatus 48 will now be described with particular reference to Fig. 10, it being noted that a separate spectral shift apparatus is employed with each of a desired number of fuel assemblies 10 in the core 16. Initially, and with each displacer rod 50 partially filled up to a minor fraction, such as 15%, of its volume with water, and with all of the sealing means 70 in place, the various spectral shift apparatus 48 are positioned upon the respective fuel assemblies 10 such that their displacer rods 50 extend into guide thimbles 18. When thus positioned, the displacer rods 50 are disposed in the closed primary flow path 32 of the primary moderator/coolant and consequently they displace a predetermined volume of the primary moderator/coolant according to their size, thereby causing the spectrum of nuclear reactivity produced by the fuel rods 22 in the core 16 to be shifted from an excessively high, initial level down to a lower level.

Thereafter, the power of the reactor core 16 is elevated to its normal operating level, ordinarily through manipulation of the control rods (not shown), and the primary pump 31 is operated to increase the pressure of the primary moderator/coolant in the flow path 32 likewise to a normal operating level. At this level of reactor operation, the pressure of the water within the displacer rods 50 is also elevated, and the pressure differential across the rupturable disk 72, based upon the pressure of the water within the sealed displacer rods 50 relative to the pressure of the primary moderator/coolant, will typically be 75, 17x10$^5$N/m$^2$ (78 atm.) or less. As mentioned earlier herein, the disk 72 is designed to withstand pressure variations due to operating transients up to approximately 121, 8x10$^5$N/m$^2$ (120 atmospheres).

When rupture of the disk 72 and thus flooding of the rods 50 for the purpose of effecting a reverse spectral shift are desired, the following unique operational transient is imposed while maintaining the pressure of the primary moderator/coolant at its normal operating level of approximately 152, 25x10$^5$N/m$^2$ (150 atmospheres). The reactor power is decreased to about two percent of the normal operating level, with the turbine 38 being taken off-line and the reactor core 16 being made subcritical by an amount of reactivity equivalent to the maximum reactivity that could be added by rupture of the disk 72 and flooding of the rods 50. The primary coolant temperature is reduced to 190-205°C by dropping steam pressure. At about 205°C, the saturation pressure inside each of the rods 50 is approximately 17, 255x10$^5$N/m$^2$ (17 atm.) and the differential pressure across the rupturable disk 72 is approximately 137, 025x10$^5$N/m$^2$ (135 atmospheres), i.e. above the predetermined differential of 121, 8x10$^5$N/m$^2$ (120 atm.) at which the disk is designed to rupture. Thus, the disk 72 will rupture and the displacer rods 50 consequently will become flooded, means in the form of a flow restrictor 78 (see Fig. 8) preferably being provided in the upper portion of the tubular body 51 of each displacer rod 50 to restrict the rate of moderator/coolant flow into the body 51. Flooding of the displacer rods 50 with moderating coolant produces a reverse spectral shift which returns the reactivity to the desired higher level. After this reverse spectral shift, the reactor core 16 is returned to normal power.

To obtain maximum " spectral shift" benefit, as many fuel assemblies as possible should be equipped with the apparatus 48, such as, for example, all fuel assemblies having no control rod assemblies associated therewith. In order to minimize or eliminate extension of the refuelling down-time, refurbishment of the apparatus 48, consisting in draining the rods 50 and replacing the ruptured disks 72, preferably should be done off-line. For instance, after installing a refurbished spectral shift apparatus 48 in the reactor core 16, the removed spectral shift apparatus can be taken to a fuel storage area and readied for installation during a subsequent refuelling stop. Temporary storage of the apparatuses can be made in the stored fuel. An apparatus lifetime of 3-5 cycles appears to be feasible.

Refurbishing Apparatus and Method

The refurbishing apparatus embodying the present invention and generally designated with numeral 80 is particularly well adapted for use in conjunction with the apparatus 48 described above. More specifically, the refurbishing apparatus 80 is used to remove or drain from the displacer rods 50 the moderator/coolant with which they were flooded for the purpose of effecting a reverse spectral shift. Basically, and as seen from Fig. 1 and 8, the refurbishing apparatus 80 comprises a plurality of first and second ports 82, 84 formed in the central cylindrical member 58, a pair of first and second conduits 86, 88 extending between the cylindrical member 58 and each respective displacer rod 50, and a generally cylindrical refurbishing tool 90 insertable in the central plenum 60 of the cylindrical member 58. While only two pairs of the first and second conduits 86, 88 are seen in Figs. 1, 2 and 8, it should be understood that for each of the displacer rods there is provided a separate pair of conduits 86, 88.

More particularly, the first and second ports 82, 84 which are holes in wall portions of the cylindrical member 58 are vertically displaced with respect to one another and both communicate with the central plenum 60. Each pair of first and second conduits 86, 88, in the form of thin elongate capillary tubes, establishes fluid flow communication between the respective pair of first and second ports 82, 84 and upper and lower portions 92, 94 respectively of the associated displacer rods 50. As seen from Fig. 8, the first and second conduits 86, 88 extend from the first and second ports 82, 84 radially outward along a respective tubular vane 64 to locations above the respective displacer rod 50 associated with the particular pair of conduits. There, the conduits are bent ninety degrees downward to extend through the vane 64 and through the upper flow opening 54 of the rod 50. The first conduit 86 terminates within the upper portion 92 of the rod 50 a relatively short distance below the vane 64, whereas the second conduit 88 extends through the flow restrictor 78 and terminates within the lower portion 94 of the rod 50 a relatively short distance above the lower end plug 52 thereof.

The charging tool 90 has formed therein first and second flow passageways 96, 98 with corresponding first and second flow openings 100, 102. Means in the form of 0-rings 104, 106, 107 are provided which are effective, when the charging tool 90 is inserted in the cylindrical member 58, to form therebetween seals placing the first and second flow openings 100, 102 in separate fluid flow communication respectively with the first and second ports 92, 94 of the cylindrical member 58. Preferably, the 0-rings 104, 106, 107 are disposed on the interior wall of cylindrical member 58, with the first 0-ring 104 disposed above the first port 82, the second 0-ring 106 disposed between the ports 82 and 84, and the third 0-ring 107 disposed below the second port 84.

Thus, when the ruptured disk 72 is removed from and the charging tool 90 is inserted into the cylindrical member 58, the first conduit 86 together with first flow passageway 96 will provide an entrance path for air to the upper portion 92 of the displacer rod 50, and the second conduit 88 together with the second flow passageway 98 will provide an exit path, separate from the entrance path, for moderator/coolant, such as water, from the lower portion 94 of the rod 50. Therefore, the water within the rod 50 can be removed by introducing air under pressure through the entrance path into the upper rod portion 92, and thereby forcing water from the lower rod portion 94 out through the exit path until the water level within the hollow rod 50 has dropped to the level of the lower end 108 of the second conduit 88 whereupon further removal of water will automatically cease. The end 108 of the second conduit 88 is spaced from the bottom of the rod 50 a distance such as to leave in the rod a quantity of water W equivalent to a minor fraction of approximately fifteen percent of the rod volume.

When the water level in the rod 50 has dropped to the level of the conduit end 108, air instead of water will begin to exit through the exit path 88, 98 and from its passageway 98, which will serve the operator as a signal to the effect that the water has been drained from the rod 50 down to the desired level. When the water has thus been drained to the desired level from all of the displacer rods 50, the charging tool 90 can be removed from the cylindrical member 58, and a new unruptured sealing disk can be attached on the upper end of the member 58 so as to reseal the plenum 60 and, consequently, the displacer rods 50.

It will be apparent to those skilled in the art that instead of providing a special port 82 and a special conduit 86 as an air entrance or pressurizing path for each displacer rod 50, it is readily feasible, and may be preferred, to utilize the various flow channels 67 in the hub 66 together with the axial passages and the outlets 68 in the respective tubular vanes 64 for the purpose of pressurizing the various displacer rods 50 to remove coolant therefrom. This alternative approach would require only a few minor modifications to be made to the refurbishing tool 90 shown herein, i.e. it would require omitting the ports 82, extending the air passageway 96 far enough to align its openings 100 with the flow channels 67, and relocating the upper most O-ring 104 to a level below the inlets to the channels 67 or omitting it altogether. The air entrance path for each displacer rod would then be formed by the passageway 96 of the refurbishing tool 90, the respective flow channel 67 of the hub 66, and the respective tubular vanes 64 associated therewith, whereas the exit path will be the same as described hereinbefore, namely, the path through conduit 88, port 84, and flow passageway 98.

**Claims**

1. A method of refurbishing a spectral shift apparatus having at least one hollow water displacer rod substantially filled with moderator/coolant liquid, characterized by the steps of:

(a) establishing fluid flow communication with an upper interior portion of said displacer rod to provide an air entrance path having an outlet disposed in said upper interior portion;

(b) establishing fluid flow communication with a lower interior portion of said displacer rod to provide a separate liquid exit path having an inlet disposed in said lower interior portion; and

(c) introducing air through said air entrance path under sufficient pressure to force all liquid above the level of said inlet from the displacer rod through said liquid exit path.

2. A method according to claim 1, characterized in that said inlet of the liquid exit path is spaced above the lower end of the hollow within the displacer rod a distance causing a predetermined quantity of liquid to remain in the displacer rod.

3. A refurbishing apparatus (80) for refurbishing a spectral shift apparatus having at least one hollow water displacer rod (50) substantially filled with moderator/coolant liquid, characterized by the combination comprising:

(a) first conduit means (86) disposed in fluid flow communication with an upper portion (92) of the interior of said displacer rod (50);

(b) second conduit means (88) disposed in fluid flow communication with a lower portion (94) of the interior of the displacer rod (50); and

(c) means (58, 90) interconnectable with said first and second conduit means in a manner such as to provide an entrance path for air under pressure to the upper interior portion (92) through the first conduit means, and to provide an exit path for liquid from said lower interior portion (94) through said second conduit means, said exit path and said entrance path being separate from each other.

4. A refurbishing apparatus according to claim 3, characterized in that said second conduit means (88) has the inlet end (108) thereof spaced from the bottom of the hollow in the displacer rod (50) a distance causing a predetermined quantity of moderator/coolant liquid to remain in the displacer rod.

5. A refurbishing apparatus according to claim 3 or 4, characterized in that the interconnectable means (58, 90) comprise a tubular member (58) having an opening (62) at one end thereof, a pair of first and second ports (82, 84) displaced from one another, and a central plenum (60) communicating with said opening (62) and said ports (82, 84); and an elongate refurbishing tool (90) adapted to be inserted into said central plenum (60) of the tubular member through said end opening (62) thereof, and having a pair of first and second flow passageways (96, 98) extending therethrough, one of said tubular member (58) and said elongate refurbishing tool (90) having thereon sealing means (104, 106, 107) cooperable with surface portions of the other of said tubular member and said refurbishing tool so as to place flow openings (100, 102) of said first and second passageways into separate fluid flow communication respectively with said first and second ports (82, 84) of the tubular member (58).

6. A refurbishing apparatus according to claim 5, characterized in that said sealing means (104, 106, 107) are 0-rings spaced axially apart and disposed respectively above, between, and below said flow openings (100, 102) and said ports (82, 84) when the refurbishing tool (90) is inserted in said central plenum (60).

7. A refurbishing apparatus according to claim 5 or 6, characterized in that said second conduit means (88) comprises a tube which extends from said second port (84) of the tubular member (58) and into said lower portion (94) of the displacer rod (50).

8. A refurbishing apparatus according to claim 5, 6 or 7, characterized in that said first conduit means (86) comprises a tube extending from said first port (82) of the tubular member (58) and into said upper portion (92) of the displacer rod (50).

9. A refurbishing apparatus according to claim 5, 6 or 7, characterized in that said tubular member (58) has associated therewith a manifold (56) which supports the tubular member and is in fluid flow communication with the central plenum (60) thereof, said or each displacer rod (50) being supported from and in fluid flow communication with a tubular vane (64) which is connected to and in fluid flow communication with the manifold (56) and forms part of said first conduit means.

**Patentansprüche**

1. Verfahren zur Erneuerung eines Spektralverschiebungsapparates mit mindestens einer hohlen Wasserverdrängerstange, die im wesentlichen mit Moderator/Kühlflüssigkeit gefüllt ist, dadurch gekennzeichnet, daß:

a) eine Strömungsverbindung mit einem oberen Innenbereich der Verdrängerstange zur Schaffung eines Lufteintrittspfades hergestellt wird, wobei der Lufteintrittspfad einen Ausgang am oberen Innenbereich aufweist;

b) eine Strömungsverbindung mit einem unteren Innenbereich der Verdrängerstange zur Schaffung eines separaten Flüssigkeitsaustrittspfades hergestellt wird, wobei der Flüssigkeitsaustrittspfad einen Einlaß am unteren Innenbereich aufweist; und

c) Luft mit genügendem Druck durch den Lufteintrittspfad eingeführt wird, um sämtliche Flüssigkeit oberhalb des Niveaus des Einlasses der Verdrängerstange durch den Flüssigkeitsaustrittspfad zu drücken.

2. Verfahren nach Anspruch 1, dadurch gekennzeichnet, daß der Einlaß des Flüssigkeitsaustrittspfades mit Abstand oberhalb des unteren Endes des Hohlraumes in der Verdrängerstange angeordnet ist, wobei der Abstand bewirkt, daß eine bestimmte Menge Flüssigkeit in der Verdrängerstange verbleibt.

3. Erneuerungsapparat (80) zur Erneuerung eines Spektralverschiebungsapparates mit mindestens einer hohlen Wasserverdrängerstange (50), die erheblich mit Moderator/Kühlflüssigkeit gefüllt ist, gekennzeichnet durch die Kombination:

a) eine erste Leitung (86) steht mit einem oberen Bereich (92) des Innenraumes der Verdrängerstange (50) in Strömungsverbindung;

b) eine zweite Leitung (88) steht mit einem unteren Bereich (94) des Innenraumes der Verdrängerstange (50) in Strömungsverbindung; und

c) Mittel (58, 90), die mit dem ersten und dem zweiten Kanalsystem so verbindbar sind, daß durch die erste Leitung ein Eintrittspfad für Druckluft zum oberen Innenbereich (92) entsteht, und daß ein Austrittspfad durch die zweite Leitung für Flüssigkeit aus dem unteren Innenbereich (94) entsteht, wobei Austrittspfad und Eintrittspfad voneinander getrennt sind.

4. Erneuerungsapparat nach Anspruch 3, dadurch gekennzeichnet, daß die zweite Leitung (88) mit ihrem Einlaßende (108) mit Abstand vom Boden des Hohlraumes im Verdrängerstab (50) angeordnet ist, so daß eine bestimmte Menge Moderator/Kühlflüssigkeit im Verdrängerstab verbleibt.

5. Erneuerungsapparat nach einem der Ansprüche 3 oder 4, dadurch gekennzeichnet, daß die verbindbaren Mittel (58, 90) ein rohrförmiges Bauteil (58) mit einer Öffnung (62) an seinem einen Ende, einem Paar erste und zweite, gegeneinander versetzte Öffnungen (82, 84), und einer zentralen Kammer (60) aufweist, der mit den genannten Öffnungen (62, 82, 84) in Verbindung steht; und daß ein längliches Erneuerungswerkzeug (90) vorgesehen ist, das in die zentrale Kammer (60) durch die Endöffnung (62) des rohrförmigen Bauteils einführbar ist, und das zwei erste und zweite durch das Bauteil hindurchführende Strömungswege (96, 98) aufweist, wobei entweder der rohrförmige Teil (58) oder das längliche Erneuerungswerkzeug (90) Dichtungsmittel (104, 106, 107) aufweist, die mit Bereichen der Oberfläche des jeweils anderen Teils so zusammenwirken, daß Strömungsöffnungen (100, 102) der ersten und zweiten Strömungswege jeweils gesondert mit den entsprechenden Öffnungen (82, 84) des rohrförmigen Bauteils (58) in Strömungsverbindung bringbar sind.

6. Erneuerungsapparat nach Anspruch 5, dadurch gekennzeichnet, daß die Dichtungsmittel (104, 106, 107) durch O-Ringe gebildet wird, die mit axialem Abstand oberhalb, zwischen bzw. unterhalb der Strömungsöffnungen (100, 102) und der ersten und zweiten Öffnungen (82, 84) angeordnet sind, wenn das Erneuerungswerkzeug (90) in die zentralen Kammern (60) eingeführt wird.

7. Erneuerungsapparat nach einem der Ansprüche 5 oder 6, dadurch gekennzeichnet, daß die zweite Leitung (88) ein Rohr aufweist, daß von der zweiten Öffnung (84) des rohrförmigen Bauteils (58) in den unteren Bereich (94) der Verdrängerstange (50) verläuft.

8. Erneuerungsapparat nach einem der Ansprüche 5, 6 oder 7, dadurch gekennzeichnet, daß die erste Leitung (86) ein Rohr aufweist, das von der ersten Öffnung (82) des rohrförmigen Bauteils (58) in den oberen Bereich (92) der Verdrängerstange (50) verläuft.

9. Erneuerungsapparat nach einem der Ansprüche 5, 6 oder 7, dadurch gekennzechnet, daß das rohrförmige Bauteil (58) einen ihm zugeordneten Verteiler (56) aufweist, der das rohrförmige Bauteil hält und mit dessen zentraler Kammer (60) in Strömungsverbindung steht, wobei die oder jede Verdrängerstange (50) an einem rohrförmigen Arm (64) gehaltert ist und mit diesem in Strömungsverbindung steht, der seinerseits mit dem Verteiler (56) verbunden ist und mit diesem in Strömungsverbindung steht und einen Teil der ersten Leitung bildet.

**Revendications**

1. Procédé de remise en état de fonctionnement d'un appareil de dérive spectrale comportant au moins une barre creuse de déplacement d'eau sensiblement remplie de liquide réfrigérant-modérateur, caractérisé par les stades de:

a) établissement d'une communication pour l'écoulement de fluide avec la partie haute intérieure de cette barre de déplacement afin de former un circuit d'entrée d'air comportant une sortie placée dans cette partie haute intérieure;

b) établissement d'une communication pour l'écoulement de fluide avec la partie basse intérieure de cette barre de déplacement afin de former un circuit distinct de sortie de liquide comportant une entrée placée dans cette partie basse intérieure; et

c) introduction d'air par ce circuit d'entrée d'air sous une pression suffisante pour refouler hors de la barre de déplacement, par le circuit de sortie de liquide, tout le liquide qui se trouve audessus du niveau de cette entrée.

2. Procédé suivant la revendication 1, caractérisé en ce que cette entrée du circuit de sortie de liquide est située au-dessus de l'extrémité inférieure de l'espace creux intérieur de la barre de déplacement, à une hauteur telle qu'une quantité prédéterminée de liquide restera dans la barre de déplacement.

3. Dispositif (80) de remise en état de fonctionnement d'un appareil de dérive spectrale comportant au moins une barre creuse de déplacement d'eau sensiblement remplie de liquide réfrigérant-modérateur, caractérisé par la combinaison comprenant:

a) un premier moyen formant conduit (86) disposé de manière à communiquer pour l'écoulement de fluide avec la partie haute (92) de l'intérieur de cette barre (50) de déplacement;

b) un second moyen formant conduit (88) disposé de manière à communiquer pour l'écoulement de fluide avec la partie basse (94) de l'intérieur de cette barre (50) de déplacement; et

c) un moyen (58, 90) pouvant être relié à ce premier et à ce second moyens formant conduits de manière à fournir un circuit d'entrée pour l'air sous pression allant vers la partie haute intérieure (92) par le premier moyen formant conduit, et à fournir un circuit de sortie pour le liquide venant de la partie basse intérieure (94) par le deuxième moyen formant conduit, ce circuit de sortie et ce circuit d'entrée étant distincts l'un de l'autre.

4. Dispositif de remise en état de fonctionnement suivant la revendication 3, caractérisé en ce que l'extrémité d'entrée (108) de ce second moyen formant conduit (88) est espacée du fond de l'espace creux de la barre (50) de déplacement d'une hauteur telle qu'une quantité prédéterminée de liquide réfrigérant-modérateur restera dans la barre de déplacement.

5. Dispositif de remise en état de fonctionnement suivant la revendication 3 ou 4, caractérisé en ce que le moyen de liaison (58, 90) comprend un élément tubulaire (58) présentant une ouverture (62) à l'une de ses extrémités, une paire de premier et second orifices (82, 84) décalés l'un par rapport à l'autre, et une chambre centrale (60) d'accumulation communiquant avec cette ouverture (62) et avec ces orifices (82, 84); et un outil allongé (90) de remise en état de fonctionnement qui est prévu pour être introduit dans cette chambre centrale (60) d'accumulation de l'élément tubulaire par l'ouverture (62) formée à son extrémité, et qui est traversé par une paire de premier et second passages (96, 98) d'écoulement, cet élément tubulaire (58) ou cet outil allongé (90) de remise en état de fonctionnement étant doté de moyens de scellement (104, 106, 107) qui coopèrent avec les parties formant surfaces de l'outil allongé ou de l'élément tubulaire de manière à mettre les orifices d'écoulement (100, 102) de ce premier et de ce second passages d'écoulement en communication pour l'écoulement séparé de fluide respectivement avec le premier et le second orifices (82, 84) de l'élément tubulaire (58).

6. Dispositif de remise en état de fonctionnement suivant la revendication 5, caractérisé en ce que les moyens de scellement (104, 106, 107) sont des joints toriques axialement espacés et disposés respectivement au-dessus, entre et audessous des orifices d'écoulement (100, 102) et des orifices (82, 84) lorsque l'outil (90) de remise en état de fonctionnement est introduit dans la chambre centrale (60) d'accumulation.

7. Dispositif de remise en état de fonctionnement suivant la revendication 5 ou 6, caractérisé en ce que le second moyen formant conduit (88) comprend un tube qui part du second orifice (84) de l'élément tubulaire (58) et qui arrive dans la partie basse (94) de la barre (50) de déplacement.

8. Dispositif de remise en état de fonctionnement suivant la revendication 5, 6 ou 7, caractérisé en ce que le premier moyen formant conduit (86) comprend un tube qui part du premier orifice (82) de l'élément tubulaire (58) et qui arrive dans la partie haute (92) de la barre (50) de déplacement.

9. Dispositif de remise en état de fonctionnement suivant la revendication 5, 6 ou 7, caractérisé en ce qu'à l'élément tubulaire (58) est associé un collecteur (56) qui supporte l'élément tubulaire et communique pour l'écoulement de fluide avec sa chambre centrale (60) d'accumulation, la ou chaque barre (50) de déplacement étant supportée par un bras tubulaire avec lequel elle communique pour l'écoulement de fluide, lequel bras est relié au collecteur (56) avec lequel il communique pour l'écoulement de fluide et fait partie du premier moyen formant conduit.

FIG. 1

FIG.2

FIG.3

FIG. 4

FIG. 5

FIG. 6

FIG. 7

FIG.8

FIG.9

FIG.10